# EUROPEAN PATENT SPECIFICATION

(11) **EP 1 724 167 B1**
(45) Date of publication and mention of the grant of the patent: **03.11.2010**
(21) Application number: 06010405.6
(22) Date of filing: 19.05.2006
(51) Int. Cl.: B60R 25/04, B60R 25/02

(54) **Vehicle controller for straddle-type vehicle**
Fahrzeugsteuerungsvorrichtung für ein Spreitzsitz-Fahrzeug
Contrôleur de véhicule pour véhicule de type monté à califourchon

(30) Priority: 20.05.2005 JP 2005148594
(43) Date of publication of application: 22.11.2006
(73) Proprietor: Yamaha Hatsudoki Kabushiki Kaisha, Shizuoka-ken Shizuoka 438-8501 (JP)
(72) Inventor: Unno, Hitoshi, Iwata-shi, Shizuoka-ken, 438-8501 (JP)
(74) Representative: Grünecker, Kinkeldey, Stockmair & Schwanhäusser Anwaltssozietät

(56) References cited:
- EP-A- 1 232 918
- EP-A- 1 504 986
- EP-A- 1 547 912
- US-A1- 2004 164 850

## Description

The present invention relates to a vehicle controller for a straddle-type vehicle, and particularly to a vehicle controller provided with an antitheft function.

For commonly used two-wheeled motor vehicles, engine start/stop and locking/unlocking of the steering are performed by mechanical key operation that must involve inserting a key into a keyhole before key operation, which is burdensome. Thus, a remote control system has been proposed in which an owner of the vehicle carries a portable transmitter (portable device) for transmitting a signal to the vehicle to remotely control the engine for its startup and the steering lock for unlocking. This system ensures security by coding the signal to be transmitted to the vehicle as well as by authenticating the received encrypted signal with an authentication function installed on the vehicle.

JP-A-Hei 3-21575 discloses a conventional art of such authentication system. In this system, after authentication succeeds, a power circuit for driving the vehicle is switched-ON, and under this condition, an engine start circuit and a lock/unlock actuator, such as steering lock, are enabled, so that a starting and a release switches are manually operated to start-up the engine and release the steering lock, respectively. According to this system, if the authentication fails, the power circuit for driving the vehicle cannot be switched-ON, which disables the engine and the release function of the steering lock to provide antitheft protection for the vehicle.

In addition, JP-A-Hei 6-247260, discloses another conventional art of the authentication system with a non-contact IC card. If authentication succeeds, the steering lock is released while the engine is set to be enabled in conjunction with the release of the steering lock. Engine enabled state setting means as well as steering lock release means are accommodated together in a rigid steering lock unit, thereby preventing from compulsory engine start-up by an unauthenticated driver.

According to the disclosure of JP-A-Hei 3-21575, if authentication is determined to be successful, the engine start circuit and the unlock actuator, such as the steering lock, are enabled. But indeed, manual operation of the starting and release switches is necessary for engine start-up and release of the steering lock, respectively. Thus, in the case where moving a vehicle without starting-up the engine is desired solely for the purpose of maintenance or the like, releasing the steering lock must involve manual operation of the release switch after authentication is determined to be successful, which is burdensome.

According to the disclosure of JP-A-Hei 6-247260, a non-contact IC card is used to determine authentication, and if the authentication is successful, the steering lock is released, but not using remote control, which causes a usability problem. In addition, accommodating the engine enabled state setting means in the steering lock unit increases a volume thereof, which disadvantageously limits a layout space for the unit. The present invention is derived from the foregoing problems.

US 200410164850 A1 discloses a motorcycle anti-theft device, in which a remote control key sends an unlocking signal including an ID to a remote control receiver of a controller. If a CPU of the controller determines that the ID included in the unlocking signal matches a registration ID, an actuator is operated to unlock a handlebar of the motorcycle.

EP 1 232 918 A2 refers to a light vehicle in which, if the main switch is switched from off to on, the main relay can be switched on and, consequently, energization of all of the electric systems including the engine starting circuit is enabled.

In EP 1 504 986 A1, upon operation of a start/stop button, an actuation signal is generated by a base station and is emitted by an antenna. An electronic badge receives the actuation signal and emits in response thereto a coded signal to the base station. Said base station comprises a decrypting algorithm and generates a secondary coded signal which is transmitted to functional units by a data bus.

It is an objective of the present invention to provide a vehicle controller for a straddle-type vehicle, which offers improved maintenance convenience and high security vehicle antitheft system.

According to the present invention, this objective is solved by a vehicle controller for a straddle-type vehicle according to independent claim 1.

Preferably, upon reception of a request signal transmitted from the vehicle through operation of an activating switch, the portable device transmits the code signal.

According to another preferred embodiment, a vehicle-mounted unit to be unlocked by an actuator is provided; communication of an encrypted signal is conducted between the control unit of the controller, and the vehicle-mounted unit; and if authentication of the encrypted signal is successful, the unlock control section of the vehicle-mounted unit unlocks the actuator.

Therein, preferably, communication of an encrypted signal between the control unit and the vehicle-mounted unit is conducted through operation of the unlock switch for the vehicle-mounted unit.

According to yet another preferred embodiment, the vehicle driving source is an engine or an electric motor.

Further, the vehicle-mounted unit might be a seat or a fuel tank.

According to still another preferred embodiment, communication of an encrypted signal between the control unit and the control section of the vehicle driving source is conduced through operation of a starting switch provided in the control section of the vehicle driving source, and the activating switch and the starting switch are combined into one switch mechanism.

There might be further provided a two-wheeled motor vehicle having a vehicle controller according to one of the above embodiments.

Preferably, the control unit of the controller, the steering lock, and the control section of the vehicle driving source are separate units, being placed at individual locations of the vehicle.

In the following, the present invention is explained in further detail with respect to several embodiments thereof, in conjunction with the accompanying drawings:
- FIG. 1: is a block diagram illustrating a basic configuration of a vehicle controller for a two-wheeled motor vehicle according to Embodiment 1,
- FIG. 2: is a flow chart illustrating a vehicle control method using the vehicle controller according to Embodiment 1,
- FIG. 3: is a block diagram illustrating a basic configuration of a vehicle controller for a two-wheeled motor vehicle according to Embodiment 2,
- FIG. 4: is a flow chart illustrating a vehicle control method using the vehicle controller according to Embodiment 2, and
- FIG. 5: illustrates an example in which the vehicle controller for a two-wheeled motor vehicle is mounted to the vehicle.

Description of Reference Numerals and Symbols:
10: portable device
20: control unit
21: receiving circuit
22: code identification means
23: power source for control unit
24: unlock control section
25: CAN system
26: activating switch
30: steering lock
31: actuator
40: electronic control unit
42: starting switch
50: communication line
60: seat lock
62, 72: actuator
63, 73: unlock switch
70: tank cap lock
80: seat
90: handlebars
100, 110: vehicle controller
120: two-wheeled motor vehicle

An embodiment is described below with reference to the drawings. In the drawings below, for the sake of simplifying explanation, components having substantially the same function are indicated with the same reference symbol. Further, the teaching of the present invention is not limited to the following embodiment.

### (Embodiment 1)

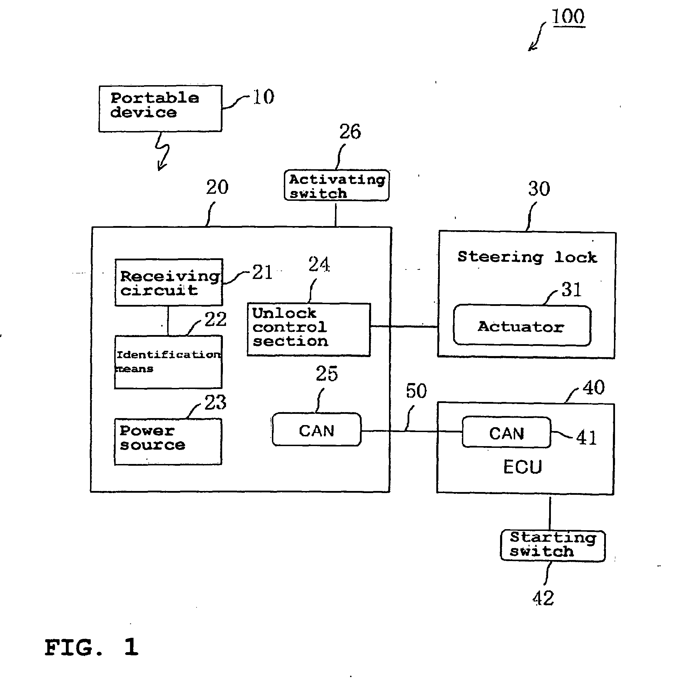

FIG. 1 is a block diagram illustrating a basic configuration of a vehicle controller 100 for a two-wheeled motor vehicle according to Embodiment 1.

The vehicle controller 100 of the embodiment has an authentication system including: a portable device 10, which a rider carries, for transmitting a code signal; a receiving circuit 21 installed in the vehicle for receiving the code signal; and code identification means 22 for identifying the received code signal to authenticate whether or not a rider is an owner of the vehicle. Upon receiving a request signal transmitted from the vehicle through operation of an activating switch 26, the portable device 10 transmits a code signal.

When the authentication system determines code authentication is successful, an unlock control section 24 of a control unit 20 issues a release signal to actuate release means (actuator) 31 of the steering lock 30 to release the steering lock 30, as well as to supply power from the control unit 20 to an engine electronic control unit (ECU) 40, thereby allowing the engine to start-up or be enabled. The unlock control section 24 is installed in the control unit 20. Through the operation of the activating switch 26, a power source 23 of the control unit 20 is ON to supply power therefrom to the unlock control section 24.

The engine ECU 40 may communicate an encrypted signal with the control unit 20 via a communication line 50 to actuate or enable the engine ECU 40 when authentication of the encrypted signal is successful. The authentication system may be established by a commonly used controller area network (CAN) system or serial communication. Communication of the encrypted signal between the control unit 20 and the ECU 40 is conducted through operation of a starting switch 42 of the engine ECU 40.

Other than the engine ECU 40, a vehicle driving source (e.g. electric motor) may also be controlled by using the CAN system in the same manner as described.

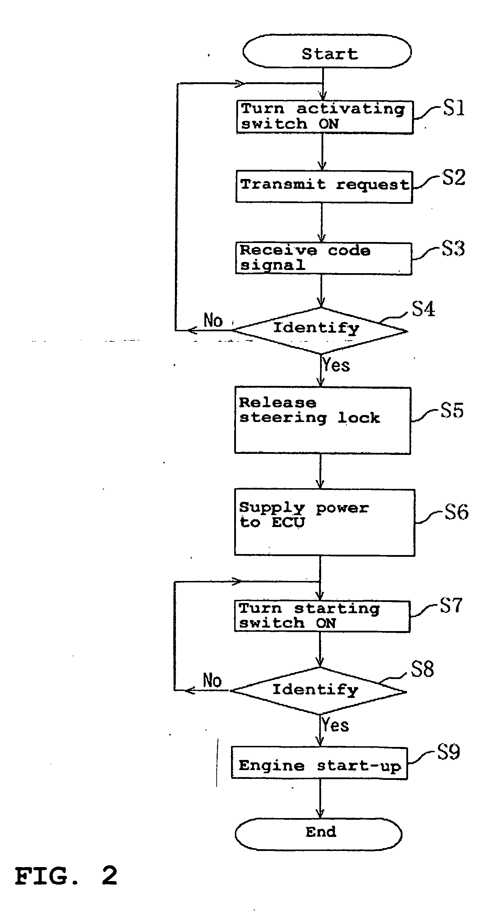

Now, a vehicle control method using the vehicle controller 100 of FIG. 1 will be described with reference to a flowchart shown in FIG. 2.

A rider presses the activating switch 26 provided on the vehicle (the step S1) to issue a request signal from a transmitter provided on the vehicle (the step S2). Upon reception of the request signal, the portable device 10, which the rider carries, sends a code signal back automatically. The receiving circuit 21 provided on the vehicle receives the code signal (step S3) and identifies the signal with a specific reference code preset by the code identification means 22 (step S4).

If the authentication succeeds, which means the rider has been identified as an owner of the vehicle, the control unit 20 issues a release signal to release the steering lock 30 (step S5) while power is supplied from the control unit 20 to the engine ECU 40 (step S6). These conditions allow the rider to move the vehicle, so that the rider can start vehicle inspection, maintenance or other work immediately. It should be understood that if the authentication fails, the steering lock 30 remains locked, thus providing antitheft protection for the vehicle.

Next, when the rider is to start-up the engine to drive the vehicle, the rider presses a starting switch 42 of the engine (Step S7). At this moment, since the engine ECU 40 has been already supplied with power, communication of an encrypted signal between the control unit 20 and the engine ECU 40 via the communication line 50 is conducted through operation of the starting switch 42 to identify the encrypted signal (step S8). If the authentication succeeds, the engine ECU 40 is activated or enabled (Step S9), so that the vehicle can be ready for running anytime.

As described above, engine start-up is permitted by the authentication system using the CAN system. Should false wiring be installed, authentication is not allowed, thereby preventing the engine from being compulsively started to provide antitheft protection for the vehicle.

The aforementioned steps: releasing the steering lock 30 (step S5) and supplying power to the engine ECU 40 (step S6), may be implemented concurrently.

### (Embodiment 2)

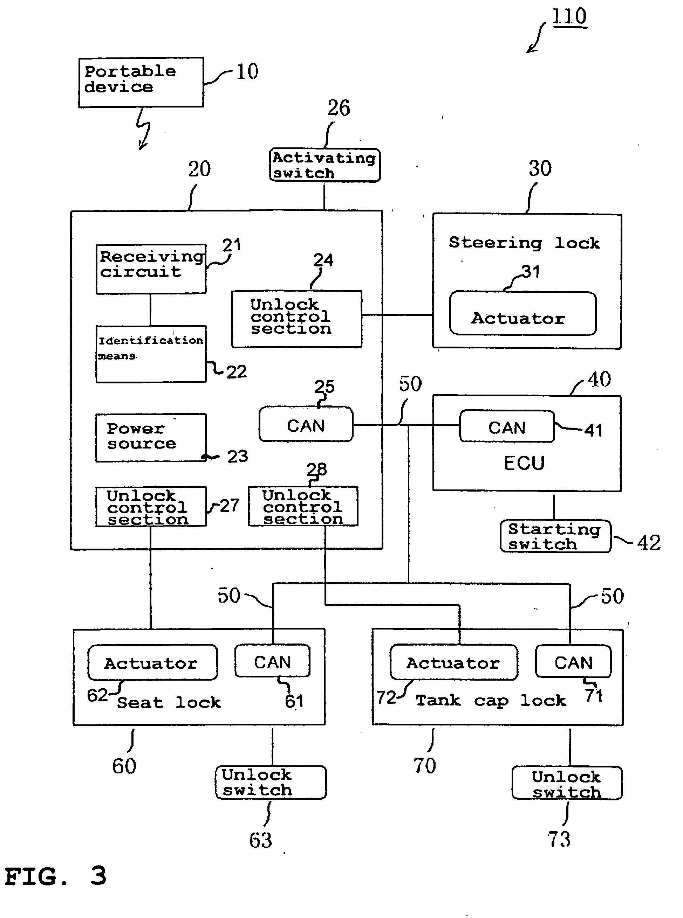

FIG. 3 is a block diagram illustrating a basic configuration of a vehicle controller 110 for a two-wheeled motor vehicle according to Embodiment 2.

The configuration including a portable device 10, a control unit 20, a steering lock 30 and an engine ECU 40 is essentially the same as the configuration shown in FIG. 1. Thus, detailed description thereof is not repeated.

A two-wheeled motor vehicle is provided with vehicle-mounted units to be unlocked by the actuator, such as seat lock and fuel tank cap lock. Although these vehicle-mounted units that are locked/unlocked electrically are convenient for a rider, there is a possibility that the units could be falsely unlocked and then items contained in a space under a seat or fuel in a fuel tank could be stolen.

To overcome this problem, the authentication system using the CAN system, which is utilized for the engine ECU 40 as shown in FIG. 1, may also be applied for the vehicle-mounted units to be unlocked by the actuator, such as the seat lock and the fuel tank cap lock, as a theft prevention measure.

More specifically, as shown in FIG. 3, in a seat lock 60 is installed an actuator 62 for unlocking the seat, and a CAN 61 as an authentication system. Pressing an unlock switch 63 allows communication of an encrypted signal between the CANs 25, 61 of the control unit 20 and of the seat lock 60 via a communication line 50 to identify the encrypted signal. If the authentication is successful, the unlock control section 27 actuates the actuator 62 to unlock the seat lock 60.

As in the same manner, for the fuel tank cap lock 70, identification of the encrypted signal between the CANs 25, 71 of the control unit 20 and of the tank cap lock 70 is implemented via the communication line 50. If the authentication is successful, the unlock control section 28 actuates the actuator 72 to unlock the fuel tank cap lock 70.

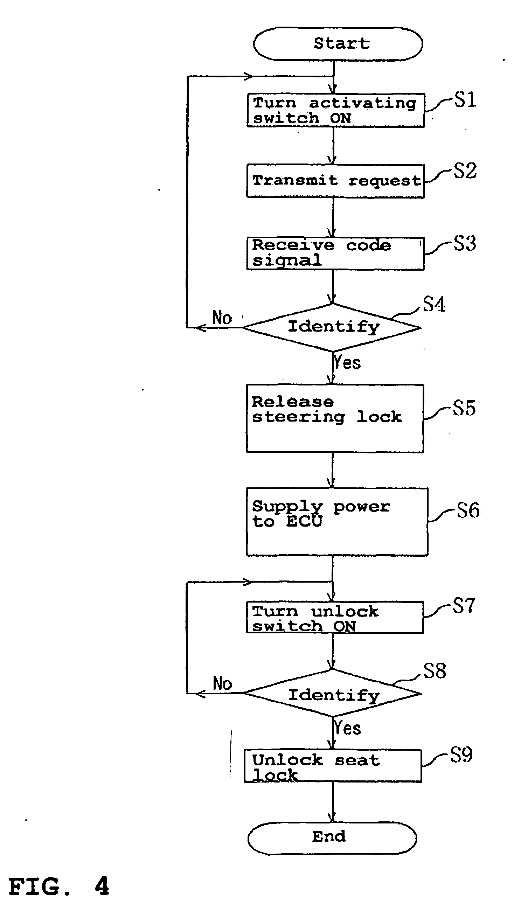

Now, a vehicle control method using the vehicle controller 110 of FIG. 3 will be described with reference to a flowchart shown in FIG. 4.

A flow from the step S1 to the step S6 in FIG. 4, that is, a process from determination of successful authentication, and release of the steering lock, then to power supply to the engine ECU 40, is the same as the flow of the flowchart shown in FIG. 2. Thus, detailed description thereof is not repeated.

Under these conditions, in order to take out the items contained in the space under the seat, the unlock switch 63 of the seat lock 60 is pressed (step S7). Since at this moment, the power source 23 of the control unit 20 has already been ON, the CAN systems 25, 41 in the control unit 20 have been activated. Therefore, operation of the unlock switch 63 allows the control unit 20 and the seat lock 60 to mutually transmit/receive an encrypted signal via the communication line 50 to identify the encrypted signal (step S8). When the authentication is successful, the seat lock 60 is unlocked (step S9) so that the items contained in the space under the seat can be taken out.

As described above, unlock of the seat lock 60 is permitted by the authentication system using the CAN system. Should false wiring be installed, authentication is not allowed, thereby preventing the seat from being compulsively opened to provide antitheft protection for the items contained.

As in the same manner, in order to refuel the fuel tank, an unlock switch 73 of the tank cap lock 70 is pressed for identification using the CAN system between the control unit 20 and the tank cap lock 70. If the authentication is successful, the tank cap lock 70 is unlocked, allowing for refueling the fuel tank.

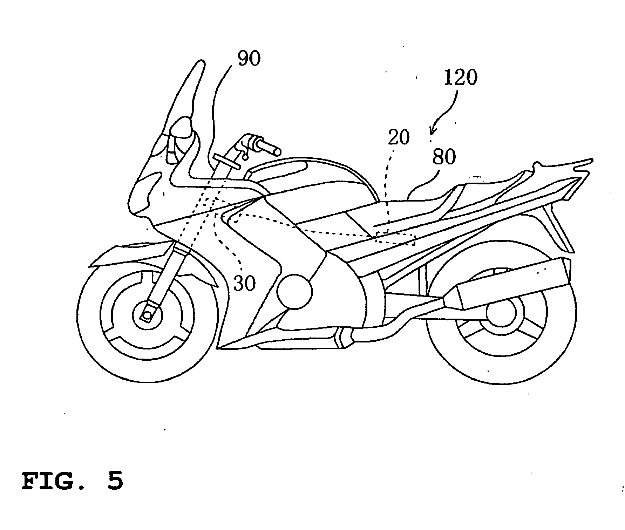

With reference to FIGs. 1 to 4, the description has been made above for the features of the configurations of the vehicle controllers 100, 110 for a two-wheeled motor vehicle according to the embodiment. In turn, FIG. 5 illustrates an example in which either one of these vehicle controllers 100, 110 is installed on a two-wheeled motor vehicle 120.

In these vehicle controllers, the control unit 20 and the steering lock 30 may be handled as separate configurations, which can improve layout flexibility in the vehicle. In the example illustrated in FIG. 5, the control unit 20 is located below a seat 80 where extra space is relatively created, while the steering lock 30 is located adjacent to handlebars 90. The control unit 20 and the steering lock 30 are connected to each other via wiring.

The engine ECU 40 (not shown) may be handled as a separate configuration from the control unit 20, which allows the engine ECU 40 to be located at any position.

A starting switch 42 for actuating the engine ECU 40 and unlock switches 63, 73 for unlocking a seat lock 60 and a fuel tank cap lock 70, respectively, can be all connected to the control unit 20 via the communication line 50 that establishes the CAN system, so that these switches can be individually located at any position.

For example, when a rider is to start-up the engine to drive the vehicle, the rider operates the activating switch 26 to activate the authentication system, and then operates the startling switch 42 to start-up the engine. Thus, if these switches are combined into one mechanism, the ease of operation can be improved. To be more specific, a push-button switch may be adopted, which is designed to function as an activating switch for a short push or as a starting switch for a long push.

In addition, the unlock switches 63, 73 of the seat lock 60 and of the fuel tank cap lock 70 may be located adjacent to the seat and the fuel tank, respectively, or may be collectively located adjacent to the activating or starting switch.

The term "two-wheeled motor vehicle" used herein means a motorcycle, including every motorbike and motor scooter, and, more particularly, is a vehicle which can be turned by tilting the vehicle body. Thus, a vehicle equipped with two or more front wheels and/or two or more rear wheels, thus having three or four (or more) wheels in total is also included in the "two-wheeled motor vehicle."

Without any limitation to motorcycles, the present teaching may also be applied to other vehicles, as long as a vehicle can take advantage of effects of the teaching. This includes any straddle-type vehicles, such as four-wheeled buggies or all terrain vehicles (ATV) and snowmobiles.

While the teaching is explained above by way of the preferable embodiment, such descriptions are not limiting items. Therefore, various modifications may be made. For example, in the authentication system, a code signal is transmitted in response to a request signal. However, the vehicle may constantly issue a code signal without transmitting any request signal, or operation of a remote control alone (transmitting a signal from the portable device) may serve the purpose. Further, in the case where the container box is designed to be unlocked by the actuator, identification of an encrypted signal using the CAN system may be implemented to unlock the container box in the same manner as the case with the mechanism having the seat lock and fuel tank cap lock.

The present embodiments can provide a vehicle controller for a straddle-type vehicle, which offers improved maintenance convenience and high security vehicle antitheft system.

The description above discloses (amongst others) an embodiment of a vehicle controller for a straddle-type vehicle including: a portable device for transmitting a code signal; and code identification means for receiving and identifying the code signal, in which if authentication of the code signal is successful, a control unit issues a release signal to actuate steering lock release means, while power is supplied from the control unit to a control section of a vehicle driving source, so that the vehicle driving source is activated or enabled.

According to one preferred embodiment, upon reception of a request signal transmitted from the vehicle through operation of an activating switch, the portable device transmits the code signal.

According to one preferred embodiment, communication of an encrypted signal is conducted between the control unit and the control section of the vehicle driving source, and if authentication of the encrypted signal is successful, the vehicle driving source is activated or enabled.

According to one preferred embodiment, a vehicle-mounted unit to be unlocked by an actuator is provided; communication of an encrypted signal is conducted between the control unit; and the vehicle-mounted unit and if authentication of the encrypted signal is successful, the unlock control section of the vehicle-mounted unit unlocks the actuator.

According to one preferred embodiment, communication of an encrypted signal between the control unit and the vehicle-mounted unit is conducted through operation of the unlock switch for the vehicle-mounted unit.

According to one preferred embodiment, the vehicle driving source is an engine or an electric motor.

According to one preferred embodiment, the vehicle-mounted unit is a seat or a fuel tank.

According to one preferred embodiment, communication of an encrypted signal between the control unit and the control section of the vehicle driving source is conduced through operation of a starting switch provided in the control section of the vehicle driving source, and the activating switch and the starting switch are combined into one switch mechanism.

The embodiments provide the vehicle controller for a straddle-type vehicle in which if authentication of a signal transmitted from the portable device is successful, the control unit of the vehicle issues a release signal to release the steering lock. This allows a driver to move the vehicle without starting-up the engine, thereby facilitating maintenance and other work. In addition, when the authentication is determined to be successful, power is supplied from the control unit to the control section of the vehicle driving source, such as engine, so that the vehicle driving source is activated or enabled. This can improve security of the vehicle antitheft system.

Communication of an encrypted signal is conducted between the control unit and the vehicle-mounted unit to be unlocked by the actuator, such as seat and fuel tank. If authentication of the encrypted signal is successful, the unlock control section of the vehicle-mounted unit unlocks the actuator. This can prevent the vehicle-mounted unit, such as seat and fuel tank, from being compulsively unlocked by an authenticated driver.

The description above discloses (amongst others) as a particularly preferred embodiment, in order to provide a vehicle controller for a straddle-type vehicle, which offers improved maintenance convenience and high security vehicle antitheft system, wherein in response to a request signal transmitted from the vehicle through operation of an activating switch 26, a portable device 10 sends a code signal back. The code signal is identified by code identification means 22. If authentication of the code signal is successful, a control unit 20 issues a release signal to actuate release means of a steering lock 30, while power is supplied from the control unit 20 to an engine ECU 40, so that the engine starts-up or is enabled.

The description above discloses as a first aspect a vehicle controller for a straddle type vehicle comprising: a portable device for transmitting a code signal; and code identification means for receiving and identifying the code signal, wherein if authentication of the code signal is successful, a control unit issues a release signal to actuate steering lock release means, while power is supplied from the control unit to a control section of a vehicle driving source, so that the vehicle driving source is activated or enabled.

The description discloses a second aspect, in the vehicle controller for a straddle type vehicle according to the first aspect, wherein upon reception of a request signal transmitted from the vehicle through operation of an activating switch, the portable device transmits the code signal.

The description discloses a third aspect, in the vehicle controller for a straddle type vehicle according to the first aspect, wherein communication of an encrypted signal is conducted between the control unit and the control section of the vehicle driving source, and if authentication of the encrypted signal is successful, the vehicle driving source is activated or enabled.

The description discloses a fourth aspect, in the vehicle controller for a straddle type vehicle according the first aspect, wherein a vehicle-mounted unit to be unlocked by an actuator is provided; communication of an encrypted signal is conducted between the control unit and the vehicle-mounted unit; and if authentication of the encrypted signal is successful, the unlock control section of the vehicle-mounted unit unlocks the actuator.

The description discloses a fifth aspect, in the vehicle controller for a straddle type vehicle according to a fourth aspect, wherein communication of an encrypted signal between the control unit and the vehicle-mounted unit is conducted through operation of the unlock switch for the vehicle-mounted unit.

The description discloses a sixth aspect, in the vehicle controller for a straddle type vehicle according to a first aspect, wherein the vehicle driving source is an engine or an electric motor.

The description discloses a seventh aspect, in the vehicle controller for a straddle type vehicle according to a fourth aspect, wherein the vehicle-mounted unit is a seat or a fuel tank.

The description discloses an eighth aspect, in the vehicle controller for a straddle type vehicle according to a first aspect, wherein communication of an encrypted signal between the control unit and the control section of the vehicle driving source is conduced through operation of a starting switch provided in the control section of the vehicle driving source, and the activating switch and the starting switch are combined into one switch mechanism.

## Claims

1. Vehicle controller for a straddle-type vehicle comprising a portable device (10) for transmitting a code signal, a control unit (20), a code identification means (22) for receiving and identifying the code signal, and a control section (40) of a vehicle driving source,
the control unit (20) and the control section (40) of the vehicle driving source being separate units, **characterised by** the fact that upon successful authentication of the code signal, the control unit (20) issues a release signal to release a steering lock (30) of the vehicle, while power is supplied from the control unit (20) to the control section (40) of the vehicle driving source so that the vehicle driving source is powered, and communication of an encrypted signal is conducted between the control unit (20) and the control section (40) of the vehicle driving source, and if authentication of the encrypted signal is successful, the vehicle driving source is activated or enabled.

2. Vehicle controller according to claim 1, wherein upon reception of a request signal transmitted from the vehicle through operation of an activating switch (26), the portable device transmits the code signal.

3. Vehicle controller according to claim 1 or 2, wherein a vehicle-mounted unit (60,70) to be unlocked by an actuator is provided; communication of an encrypted signal is conducted between the control unit of the controller, and the vehicle-mounted unit; and if authentication of the encrypted signal is successful, the unlock control section of the vehicle-mounted unit unlocks the actuator.

4. Vehicle controller according to claim 3, wherein communication of an encrypted signal between the control unit and the vehicle-mounted unit is conducted through operation of the unlock switch for the vehicle-mounted unit (60,70).

5. Vehicle controller according to one of the claims 1 to 4, wherein the vehicle driving source is an engine or an electric motor.

6. Vehicle controller according to one of the claims 3 to 5, wherein the vehicle-mounted unit is a seat or a fuel tank.

7. Vehicle controller according to one of the claims 1 to 6, wherein communication of an encrypted signal between the control unit and the control section of the vehicle driving source is conduced through operation of a starting switch provided in the control section of the vehicle driving source, and the activating switch and the starting switch are combined into one switch mechanism.

8. Two-wheeled motor vehicle having a vehicle controller according to one of the claims 1 to 7.

9. Two-wheeled motor vehicle according to claim 8, wherein the control unit of the controller, the steering lock, and the control section of the vehicle driving source as separate units are placed at individual locations of the vehicle.

## Patentansprüche

1. Fahrzeugsteuerer für ein Fahrzeug vom Spreitzsitz- Typ, aufweisend eine tragbare Vorrichtung (10) zum Übermitteln eines Code- Signales, eine Steuereinheit (20), eine Code- Identifizierungseinrichtung (22) zum Empfangen und Identifizieren des Code-Signales, und einen Steuerabschnitt (40) einer Fahrzeugantriebsquelle,
wobei die Steuereinheit (20) und der Steuerabschnitt (40) der Fahrzeugantriebsquelle separate Einheiten sind, **gekennzeichnet durch** die Tatsache, dass nach einer erfolgreichen Authentisierung des Code- Signales die Steuereinheit (20) ein Freigabesignal ausgibt, um eine Lenkverriegelung (30) des Fahrzeuges zu lösen, während Energie von der Steuereinheit (20) zu dem Steuerabschnitt (40) der Fahrzeugantriebsquelle zugeführt wird, so dass die Fahrzeugantriebsquelle mit Energie versorgt wird und eine Kommunikation eines verschlüsselten Signales zwischen der Steuereinheit (20) und dem Steuerabschnitt (40) der Fahrzeugantriebsquelle ausgeführt wird, und falls die Authentisierung des verschlüsselten Signales erfolgreich ist, die Fahrzeugantriebsquelle aktiviert oder betriebsbereit gemacht wird.

2. Fahrzeugsteuerer nach Anspruch 1, wobei nach Empfang eines Anforderungssignales, übertragen von dem Fahrzeug durch Betätigung eines Aktivierungsschalters (26), die transportable Vorrichtung das Code- Signal überträgt.

3. Fahrzeugsteuerer nach Anspruch 1 oder 2, wobei eine fahrzeugmontierte Einheit (60, 70), um durch einen Betätiger entriegelt zu werden, vorgesehen ist, die Kommunikation eines verschlüsselten Signales zwischen der Steuereinheit der Steuerung und der fahrzeugmontierten Einheit ausgeführt wird; und wenn die Authentisierung des verschlüsselten Signales erfolgreich ist, der Entriegelungssteuerabschnitt der fahrzeugmontierte Einheit den Betätiger entriegelt.

4. Fahrzeugsteuerer nach Anspruch 3, wobei die Kommunikation eines verschlüsselten Signales zwischen der Steuereinheit und der fahrzeugmontierte Einheit durch die Betätigung des Entriegelungsschalters für die Fahrzeug- montierte Einheit (60, 70) ausgeführt wird.

5. Fahrzeugsteuerer nach einem der Ansprüche 1 bis 4, wobei die Fahrzeugantriebsquelle eine Brennkraftmaschine oder ein Elektromotor ist.

6. Fahrzeugsteuerer nach einem der Ansprüche 3 bis 5, wobei die fahrzeugmontierte Einheit ein Sitz oder ein Kraftstofftank ist.

7. Fahrzeugsteuerer nach einem der Ansprüche 1 bis 6, wobei die Kommunikation eines verschlüsselten Signales zwischen der Steuereinheit und dem Steuerabschnitt der Fahrzeugantriebsquelle durch Betätigung eines Startschalters, vorgesehen in dem Steuerabschnitt der Fahrzeugantriebsquelle, ausgeführt wird und der Aktivierungsschalter und der Startschalter in eine Schaltvorrichtung kombiniert sind.

8. Zweirädriges Fahrzeug mit einem Fahrzeugsteuerer nach einem der Ansprüche 1 bis 7.

9. Zweirädriges Fahrzeug nach Anspruch 8, wobei die Steuereinheit des Steuerers, die Lenkverriegelung und der Steuerabschnitt der Fahrzeugantriebsquelle als separate Einheiten an individuellen Orten des Fahrzeuges angeordnet sind.

## Revendications

1. Contrôleur de véhicule pour un véhicule conduit à califourchon, comportant un dispositif portable (10) destiné à transmettre un signal de code, une unité de commande (20), un moyen d'identification de code (22) destiné à recevoir et à identifier le signal de code, et une section de commande (40) d'une source d'entraînement de véhicule,
l'unité de commande (20) et la section de commande (40) de la source d'entraînement de véhicule constituant des unités distinctes, **caractérisé en ce que**, lors d'une authentification réussie du signal de code, l'unité de commande (20) émet un signal de libération pour libérer un verrouillage de direction (30) du véhicule, tandis qu'une alimentation est appliquée par l'unité de commande (20) à la section de commande (40) de la source d'entraînement de véhicule, de sorte que la source d'entraînement de véhicule soit alimentée, et une communication d'un signal crypté est mise en oeuvre entre l'unité de commande (20) et la section de commande (40) de la source d'entraînement de véhicule, et si l'authentification du signal crypté réussit, la source d'entraînement de véhicule est activée ou autorisée.

2. Contrôleur de véhicule selon la revendication 1, dans lequel, à réception d'un signal de demande émis par le véhicule au moyen d'une opération d'un commutateur d'activation (26), le dispositif portable transmet le signal de code.

3. Contrôleur de véhicule selon la revendication 1 ou 2, dans lequel est adjointe une unité montée sur le véhicule (60, 70), destinée à être déverrouillée par un actionneur ; une communication d'un signal crypté est effectuée entre l'unité de commande de contrôleur et l'unité montée sur le véhicule ; et, si l'authentification du signal crypté réussit, la section de commande de déverrouillage de l'unité montée sur le véhicule déverrouille l'actionneur.

4. Contrôleur de véhicule selon la revendication 3, dans lequel une communication d'un signal crypté entre l'unité de commande et l'unité montée sur le véhicule est effectuée par une opération du commutateur de déverrouillage de l'unité montée sur le véhicule (60, 70).

5. Contrôleur de véhicule selon l'une des revendications 1 à 4, dans lequel la source d'entraînement de véhicule est un moteur ou un moteur électrique.

6. Contrôleur de véhicule selon l'une des revendications 3 à 5, dans lequel l'unité montée sur le véhicule est un siège ou un réservoir à carburant.

7. Contrôleur de véhicule selon l'une des revendications 1 à 6, dans lequel une communication d'un signal crypté entre l'unité de commande et la section de commande de la source d'entraînement de véhicule est effectuée par une opération d'un commutateur de démarrage, placé dans la section de commande de la source d'entraînement de véhicule, et le commutateur d'activation et le commutateur de démarrage sont combinés dans un mécanisme de commutation.

8. Véhicule à moteur à deux roues, possédant un contrôleur de véhicule selon l'une des revendications 1 à 7.

9. Véhicule à moteur à deux roues selon la revendication 8, dans lequel l'unité de commande du contrôleur, le verrouillage de direction et la section de commande de la source d'entraînement de véhicule sont placés, en tant qu'unités distinctes, à des emplacements individuels du véhicule.
